# FASCICULE DE BREVET EUROPEEN

(11) **EP 1 258 669 B1**
(45) Date de publication et mention de la délivrance du brevet: **05.04.2006**
(21) Numéro de dépôt: 02362009.9
(22) Date de dépôt: 17.05.2002
(51) Int. Cl.: F17C 1/16, F17C 13/00

(54) **Procédé de fabrication d'un réservoir haute pression notamment pour engin spatial et réservoir obtenu**
Verfahren zur Herstellung eines Hochdruckspeichers insbesondere für ein Raumfahrzeug und nach dem Verfahren hergestellter Hochdruckspeicher
Process for the manufacture of a high pressure storage vessel particularly for a spacecraft and storage vessel thus obtained

(30) Priorité: 18.05.2001 FR 0106583
(43) Date de publication de la demande: 20.11.2002
(73) Titulaire: EADS SPACE Transportation SA, 75116 Paris (FR)
(72) Inventeur: Gauthier, Jack, 33870 Vayres (FR)
(74) Mandataire: Thébault, Jean-Louis

(56) Documents cités:
- EP-A- 0 465 252
- EP-A- 0 550 951
- WO-A-00/57102
- WO-A-00/66939
- US-A- 5 494 188
- SIMPSON M ET AL: "WITHSTANDING THE PRESSURE" ENGINEERING. (INCL. MACHINE SHOP MAGAZINE), ENGINEERING DESIGN COUNCIL. LONDON, GB, vol. 231, no. 10, 1 novembre 1991 (1991-11-01), page ACE19,ACE21 XP000274127 ISSN: 0013-7782

## Description

La présente invention concerne les réservoirs de gaz à haute pression utilisés dans les engins spatiaux, lanceurs, satellites, sondes,...

Les lanceurs spatiaux disposent de réservoirs contenant des produits, susceptibles d'être pressurisés ou vidangés, comme des carburants du type ergols. Pour cela on utilise des réservoirs de gaz haute pression qui permettent de réaliser ces mises en pression ou ces vidanges. Ceci évite des systèmes mécaniques et de tels agencements permettent des actions très rapides, très précises et nécessitant des moyens de commande basés sur des électrovannes, ce qui est peu consommateur d'énergie et générateur d'une surmasse minimale.

Le gaz vecteur sous pression doit répondre à des considérations particulières comme la légèreté, l'absence de risque d'incendie. De ce fait, l'hélium est avantageusement retenu, notamment comparé à l'hydrogène pour l'absence de risques d'explosion ou de feu.

Néanmoins, pour certaines applications, l'azote, l'oxygène ou des gaz rares, néon, xénon peuvent être envisagés.

Ces réservoirs ont des formes sphériques, cylindro-sphériques, cylindro-elliptiques ou toriques.

Un autre intérêt de ces réservoirs sous haute pression est de permettre à l'aide de capteurs de déterminer le volume de produit contenu dans le réservoir principal, par exemple la quantité d'ergol dans le cas du combustible.

En effet, ces réservoirs voient une partie de leur contenu consommée lors du lancement par exemple et puis la partie restante sert à d'autres manoeuvres et à l'alimentation d'autres moteurs. Aussi est-il très utile de déterminer la quantité restante donc la durée de vie résiduelle, ceci de facon aisée à partir des mesures de la température et de la pression.

La demande de brevet FR-A-2 730 831 décrit une telle fonctionnalité dans le cadre plus général d'un dispositif de pressurisation d'un sous-système de propulsion d'un satellite géostationnaire.

La réalisation de réservoirs répondant à ces impératifs n'est pas simple et actuellement, les réservoirs sont entièrement métalliques, ou en matériaux composites avec une peau interne en métal qui sert de noyau et un enroulement filamentaire de fibres imprégnées de résine extérieur.

L'avantage du dernier mode de réalisation est un gain de masse pour des performances mécaniques identiques.

Un exemple est donné dans le brevet US-A-5 822 838 qui décrit un procédé de fabrication de réservoirs en alliage de titane avec une enveloppe composite graphite/époxy.

Dans le cas de ces réservoirs composites, la peau interne est en métal et assure plusieurs fonctionnalités.

Elle constitue une enveloppe étanche aux gaz et notamment à l'hélium dont on sait que les molécules ont un très petit diamètre et qu'elles franchissent la plupart des matériaux avec des taux de fuites élevés. Seuls certains alliages métalliques permettent de lutter contre une si forte diffusivité.

La peau interne sert aussi de noyau pour le bobinage et reprend les contraintes mécaniques lors de ces opérations de dépose de fibres et de polymérisation des résines.

La peau interne est aussi utilisée comme point d'ancrage des fixations du réservoir fini afin d'assurer le montage sur la structure du lanceur.

Par contre, de tels réservoirs présentent de nombreux inconvénients car la réalisation est très délicate.

En effet, le procédé de réalisation consiste à partir d'ébauche de forte épaisseur qui sont forgées, à usiner dans la masse pour réduire l'épaisseur, ce qui conduit à des durées d'usinage très longues, à une consommation importante de matière noble dont une très grande part se trouve sous forme de déchets d'usinage.

Les parties sont ensuite assemblées par une soudure équatoriale par bombardement d'électrons. Une telle soudure équatoriale par bombardement électronique est délicate et coûteuse.

Aussi une ossature métallique de ce type constitue sensiblement la moitié du coût du réservoir fini.

D'un autre côté, le changement de matière n'est pas simple. Lorsque l'on recherche parmi les autres métaux ou alliages métalliques, on se heurte au procédé de fabrication qui reste complexe car il n'y a que peu d'alternatives au forgeage et à un usinage dans la masse, au moins pour les gros réservoir de l'ordre du mètre de diamètre. De plus, il peut se poser des problèmes de compatibilité avec les gaz, ce qui a conduit les fabricants à retenir le titane comme matériau bien qu'il soit d'un prix très élevé.

Une alternative serait de recourir aux matières plastiques dont on sait que les procédés de mise en oeuvre sont d'un prix de revient beaucoup moins élevé. Par contre, si les matières plastiques sont connues, chacun sait qu'elles sont perméables aux gaz à forte diffusivité comme l'hélium et les taux de perte sont rédhibitoires, en particulier pour des fonctionnements de longue durée comme les satellites dont la durée de vie est plutôt de l'ordre de 10 à 15 années voire plus. En effet, dans ce cas, non seulement la pression diminue trop mais les fuites de gaz peuvent perturber l'environnement du satellite et notamment les appareillages embarqués.

Le document EP-0.465.252 décrit un réservoir comprenant une première peau en polymère, assurant à elle seule l'étanchéité dans certains cas. Toutefois, le réservoir ainsi obtenu ne permet pas le stockage de gaz à forte diffusivité comme l'hélium, avec un taux de fuite acceptable pour un stockage de longues durées.

Par ailleurs, les documents EP 0.550.951 et WO 00/57102 décrivent également des réservoirs constitués d'une peau interne non-métallique et d'un revêtement externe bobiné en matériau composite.

Selon la présente invention et à l'encontre des préjugés engendrés par les solutions techniques utilisées, on a recourt à des matières plastiques pour la réalisation de la peau interne d'un réservoir, mise en oeuvre d'une manière particulière, permettant d'obtenir un taux de fuite compatible avec les applications telles que les satellites longues durées ou les sondes.

A cet effet, l'invention a pour objet un procédé de fabrication d'un réservoir de gaz haute pression, notamment de l'hélium, comprenant au moins un trou (4) de remplissage et de vidange, caractérisé en ce que en ce qu'il comprend les étapes suivantes :
- fabrication par extrusion/soufflage d'une peau interne (2) en une matière plastique choisie parmi les polyéthylènes et les polyamides cristallisés de manière à obtenir aux deux pôles des zones de moindre épaisseur et entre les deux pôles une zone d'épaisseur plus importante formant raidisseur (6.1,6.2),
- mise en place d'un insert métallique (7.1, 7.2) susceptible de recouvrir une partie desdites zones de moindre épaisseur, ,
- bobinage d'un renfort (3) en fibre et résine, et
- polymérisation.

De préférence, pour la fabrication par extrusion/soufflage, on utilise un moule dont le plan de joint correspond à l'équateur du réservoir de manière à obtenir deux surépaisseurs formant des raidisseurs entre les deux pôles, les inserts étant disposés au niveau des deux pôles.

Avantageusement, on utilise une résine avec un fort coefficient d'allongement, de préférence supérieur à 8%.

La polymérisation est réalisée par une montée lente en température jusqu'à une plage comprise entre 80 et 120°C pendant plusieurs heures avec un refroidissement lent également.

Selon l'invention, on obtient un taux de fuite pour l'hélium inférieur à 5.10⁻⁹ N.m³/s ou une perméabilité moyenne de 1,16.10⁻¹³ N.m²/bar.s grâce :
- à la maîtrise de la valeur minimale de l'épaisseur de la peau interne,
- à la disposition des zones de faibles épaisseurs au niveau des pôles du réservoir qui sont revêtus d'inserts métalliques,
- à la constitution de la structure de renfort obtenue à partir d'un composite homogène, bobiné en forte épaisseur et utilisant une résine à fort allongement, et
- à la méthode de polymérisation du composite qui permet de diminuer les porosités internes de la structure de renfort.

Le procédé de fabrication d'un réservoir sous haute pression comme celui d'un lanceur spatial est maintenant décrit en détail, selon un mode de réalisation particulier, non limitatif, en regard des dessins annexés sur lesquels:
- la figure 1 est une vue en coupe de la peau interne lors de sa mise en forme en utilisant une technique d'extrusion/soufflage,
- la figure 2 est une vue en coupe de la peau interne selon le plan équatorial matérialisé par la ligne ||-|| sur la figure 1, et
- la figure 3 est une vue en coupe du réservoir selon l'invention.

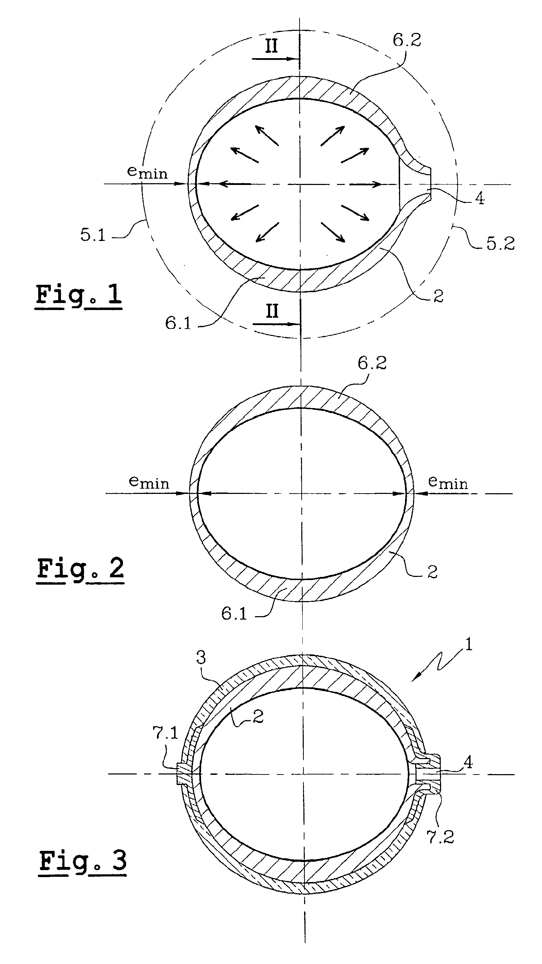

Sur la figure 3, on a représenté un réservoir 1 selon l'invention comprenant une peau interne 2 revêtue d'un bobinage de renfort 3 ainsi qu'un trou de vidange et de remplissage 4.

Le procédé consiste à réaliser un réservoir avec une peau interne en matière plastique qui présente une masse au plus égale à celle d'un réservoir avec peau interne métallique, un taux de fuite acceptable, inférieur à 5.10⁻⁹ N.m³ /s ou une perméabilité moyenne de 1,16.10⁻¹³ N.m²/bar.s.

Le procédé utilise donc des matières plastiques qui présentent un minimum de sites favorables au passage des molécules de gaz et plus particulièrement à l'hélium à très forte diffusivité.

Aussi, le procédé consiste à retenir le polyéthylène ou le polyamide cristallisés qui donnent les résultats attendus.

On peut citer comme produit du commerce, le polyamide semi-cristallisé PA6 de type EMS Grillon R50HNZ.

Un tel produit présente les propriétés suivantes :
- densité comprise entre 1,13 et 1,15,
- module d'young compris entre 1 et 2 Gpa
- allongement à la rupture en traction : 25 à 35% à - 40°C
   50 à 300 % à 23°C
- contrainte à la rupture en traction : 100 Mpa à - 40°C,
   55 à 70 Mpa à 23 °C
- température de fusion : 220°C

Pour réaliser la peau interne 2, le procédé de mise en forme est du type extrusion/soufflage.

On réalise d'abord un cylindre d'épaisseur adaptée au produit à fabriquer. Ce cylindre est ensuite plaqué sur les parois d'un moule, par soufflage.

Selon l'invention, le moule est en deux parties, 5.1 et 5.2, le plan de joint correspondant à l'équateur du réservoir, le trou 4 de vidange et de remplissage prévu au niveau d'un des pôles du réservoir 1 étant disposé au niveau d'une des deux parties.

Du fait de ce passage d'un cylindre à une sphère, on obtient une épaisseur minimale en tout point de la sphère correctement maîtrisée correspondant à un objectif moyen de 5 mm.

Ainsi, le taux de fuite étant sensiblement fonction de l'épaisseur de la peau interne, une maîtrise de cette épaisseur permet de contrôler le taux de fuite.

Comme on peut le noter sur les figures 1 et 2, les épaisseurs les plus faibles sont disposées notamment au niveau des pôles qui seront recouverts en partie par des éléments métalliques parfaitement étanches, comme cela sera expliqué ultérieurement.

Ainsi, le fait de disposer de manière judicieuse les zones de faibles épaisseurs, notamment au niveau des pôles, permet de contrôler encore mieux le taux de fuite et de réduire la superficie des zones de moindre épaisseur.

Enfin, selon ce mode de réalisation, au moins deux méridiens comportent une épaisseur plus importante que le reste de la peau interne formant deux raidisseurs 6.1 et 6.2 ce qui contribuent à améliorer la raideur de la peau interne en matière plastique, notamment lors de la phase de bobinage, comme cela sera expliqué ultérieurement.

Préalablement à la phase de bobinage, on dispose au niveau des pôles du réservoir des inserts métalliques 7.1 et 7.2 nécessaires pour le bobinage, notamment selon l'enseignement du brevet FR-2.744.517.

Avantageusement, la surface extérieure de la peau interne 2 est dégraissée et revêtue d'un film de colle. Ce film de colle contribue à réduire le taux de fuite en améliorant l'adhérence du bobinage de renfort 3 sur ladite peau interne 2.

Selon un mode de réalisation préféré, le bobinage est réalisé avec une fibre de carbone, par exemple de type T 800 de chez TORAY®, en 12000 filaments, non torsadée.

Cette fibre a été préalablement préimprégnée, à un taux de 30% environ, avec une résine ayant un allongement de préférence supérieur à 8%, comme la résine B14 M15 d'EADS® . Selon un mode de réalisation préféré, les fibres sont préimprégnées 2 par 2 et les fibres contenant 24000 filaments sont disposées 6 par 6.

Contrairement au structure de renfort de l'art antérieur qui sont poreuses et n'ont aucune fonction d'étanchéité, la structure de renfort de l'invention de part les matériaux utilisés, notamment la résine à fort coefficient d'allongement, contribue à améliorer l'étanchéité du réservoir.

Le bobinage se fait à une vitesse de l'ordre de 1 m/s, chaque couche ayant une épaisseur de l'ordre de 0,6 mm. Avantageusement, le bobinage est du type planaire, à fibres jointives et la tension est au maximum de 4 daN par mèche pour fixer un ordre de grandeur.

D'autres matériaux comme ceux à base de fibres aramides commercialisées sous la dénomination "Kevlar" ou à base de fibres de verre commercialisées sous la dénomination "Vetrotex" peuvent être utilisés.

Pour former la matrice, on peut utiliser d'autres types de résines ayant un bon coefficient d'allongement supérieur à 8%, de préférence supérieur à 11 % et avantageusement de l'ordre de 14% ou plus.

La polymérisation est réalisée par une montée lente en température jusqu'à une plage comprise entre 80 et 120°C pendant plusieurs heures avec un refroidissement lent également.

Pendant le bobinage, la peau interne 2 est soumise à une pression interne de manière à obtenir une pression relative de l'ordre de 1 à 2 bars pour limiter les déformations susceptibles d'être produites par le bobinage. Par ailleurs, grâce à la présence des raidisseurs 6.1 et 6.2 constituant des renforts entre les inserts 7.1 et 7.2, les efforts de tension engendrés par le bobinage n'induisent pas de déformations.

On équipe ensuite le réservoir ainsi obtenu avec les conduites et autres vannes pilotées nécessaires pour raccorder un tel réservoir.

Ainsi, selon l'invention, l'étanchéité du réservoir 1 est obtenue grâce :
- à la maîtrise de la valeur minimale de l'épaisseur de la peau interne,
- à la disposition des zones de faibles épaisseurs au niveau des pôles du réservoir qui sont revêtus d'inserts métalliques,
- à la constitution de la structure de renfort obtenue à partir d'un composite homogène, bobiné en forte épaisseur et utilisant une résine à fort allongement, et
- à la méthode de polymérisation du composite qui permet de diminuer les porosités internes de la structure de renfort.

Afin de donner un exemple concret, on peut citer les caractéristiques d'un tel réservoir.

Dans le lanceur Ariane 5, il est prévu plusieurs réservoirs.

Ces réservoirs ont une forme sphérique, et suivant un exemple connu, ils présentent un diamètre interne de 800 à 900 mm et un volume de 300 litres avec une pression interne de 400 bar. La perte de pression acceptable est de 0,1 bar sous 48 heures. De plus, on note que dans le cas du lanceur, de telles fuites de gaz sont minimes comparées à l'environnement durant le tir et elles ne risquent pas de polluer l'environnement du lanceur comme dans le cas des satellites.

Pour une peau interne répondant aux dimensions citées préalablement, équipée de ses fixations, on obtient ainsi les paramètres suivants :
- masse de 12 kg environ au lieu de 18 kg pour une peau interne en alliage de titane, dans le cas d'un réservoir de 81 kg,
- une épaisseur de peau interne de 5 mm au moins en tout endroit de ladite peau interne,
- une épaisseur de bobinage de 16 mm
- une perte de gaz inférieure à 5.10⁻⁹ N.m³ /s,
- une résistance à une pression supérieure à 800 bar pour la rupture.

De tels réservoirs peuvent aussi être utilisés avec des gaz moins diffusifs que l'hélium, le taux de perte n'en étant que plus faible.

On peut aussi utiliser de tels réservoirs pour des fluides hydrauliques comme dans les groupes d'activation tuyères des étages d'accélération à poudres dans les lanceurs comme Ariane 5. Actuellement de tels réservoirs sont réalisés avec une peau interne en acier avec un bobinage en matériau composite.

A titre d'exemple, un réservoir prévu pour un satellite géostationnaire de 90 litres de volume et 43 cm de diamètre pèse 18 Kg a une peau interne de 4 mm d'épaisseur, une pression de service de 300 Bar, une pression d'éclatement de 450 Bar et un taux de fuite de 5.10⁻⁹ N.m³ /s à la pression de service.

Les réservoir obtenu selon l'invention sont plus particulièrement destinés au domaine spatial avec une pression d'utilisation supérieure à la moitié de la pression d'éclatement, ce qui correspond à un coefficient de sécurité inférieur ou égal à 2.

Pour dimensionner ces réservoirs, dans une première étape, on dimensionne un réservoir avec une peau interne en titane susceptible de supporter les contraintes, notamment l'épaisseur de la peau en titane. Connaissant le rapport entre la masse volumique du titane et de la matière plastique utilisée, on peut déterminer l'épaisseur de la peau interne en matière plastique de manière à obtenir un réservoir sensiblement de la même masse.

Pour mesurer le taux de fuite, le réservoir mis sous pression à l'aide d'un gaz, notamment l'hélium, est placé dans une enceinte à vide. Entre une pompe à vide et l'enceinte, un spectromètre de masse permet de mesurer en continu la quantité de gaz, notamment l'hélium, le traversant et s'échappant du réservoir.

Le taux de fuite mesuré pour la pression d'utilisation est de l'ordre de 5.10⁻⁹N.m³ /s ce qui correspond à une perméabilité surfacique de l'ordre de 5,8.10⁻¹² N.m /Bar.s ou une perméabilité moyenne de l'ordre de 1,16.10⁻¹³ N.m² /Bar.s.

Enfin, en variante, le réservoir peut comprendre plusieurs trous de remplissage et de vidange disposés au niveau des pôles du réservoir, correspondant au zones de moindres épaisseurs de la peau interne.

## Revendications

1. Procédé de fabrication d'un réservoir de gaz haute pression, notamment de l'hélium, comprenant au moins un trou (4) de remplissage et de vidange, **caractérisé en ce que en ce qu'**il comprend les étapes suivantes :
- fabrication par extrusion/soufflage d'une peau interne (2) en une matière plastique choisie parmi les polyéthylènes et les polyamides cristallisés de manière à obtenir aux deux pôles des zones de moindre épaisseur et entre les deux pôles une zone d'épaisseur plus importante formant raidisseur (6.1,6.2),
- mise en place d'un insert métallique (7.1, 7.2) susceptible de recouvrir une partie desdites zones de moindre épaisseur,
- bobinage d'un renfort (3) en fibre et résine, et
- polymérisation.

2. Procédé de fabrication d'un réservoir sphérique selon la revendication 1, **caractérisé en ce que** les opérations d'extrusion/soufflage consistent à réaliser d'abord un cylindre d'épaisseur adaptée au réservoir à obtenir puis à placer ledit cylindre dans un moule sphérique (5.1,5.2) dont le plan de joint correspond à l'équateur du réservoir de manière à obtenir entre les deux pôles ladite zone d'épaisseur plus importante (6.1, 6.2).

3. Procédé de fabrication d'un réservoir selon la revendication 1 ou 2, **caractérisé en ce qu'**avant le bobinage dudit renfort (3) la surface extérieure de ladite peau interne (2) est revêtue d'un film de colle.

4. Procédé de fabrication d'un réservoir selon l'une quelconque des revendications 1 à 3, **caractérisé en ce que** la résine dudit renfort (3) est une résine avec un fort coefficient d'allongement, de préférence supérieur à 8%.

5. Procédé de fabrication d'un réservoir selon l'une quelconque des revendications 1 à 4, **caractérisé en ce que** la peau interne (2) est soumise à une pression interne lors du bobinage.

6. Procédé de fabrication d'un réservoir selon l'une quelconque des revendications 1 à 5, **caractérisé en ce que** la polymérisation est réalisée par une montée lente en température jusqu'à une plage comprise entre 80 et 120°C pendant plusieurs heures avec un refroidissement lent également.

7. Réservoir de gaz sous haute pression, **caractérisé en ce qu'**il comprend une peau interne (2) en matière plastique choisie parmi les polyéthylènes et les polyamides cristallisés, présentant aux pôles des zones de moindre épaisseur en partie recouvertes par un insert métallique (7.1, 7.2) ainsi qu'une structure de renfort (3) obtenue par bobinage en fibre et résine polymérisée, ledit réservoir présentant un taux de fuite de l'ordre de 5.10⁻⁹ N.m³ /s ou une perméabilité moyenne de l'ordre de 1,16.10⁻¹³ N.m²/Bar.s pour une pression d'utilisation supérieure à la moitié de la pression d'éclatement.

8. Réservoir de gaz selon la revendication 7, présentant les paramètres suivants :
- taux de fuite pour l'hélium inférieur à 5.10⁻⁹ N.m³ /s,
- masse de 12 kilogrammes environ de peau interne pour un poids total et un volume du réservoir respectivement de 81 kilogrammes et de 300 litres,
- épaisseur de peau interne de 5 mm au moins en tout endroit,
- épaisseur de bobinage de 16 mm,
- résistance à une pression de 800 Bars à la rupture.

## Claims

1. A method of manufacturing a high-pressure gas storage vessel, in particular for helium, comprising at least one filling and drainage hole (4), **characterised in that** it comprises the following steps:
- manufacturing, by extrusion/blow moulding, an internal skin (2) made from a plastics material chosen from amongst polyethylenes and polyamides crystallised so as to obtain, at the two poles, areas of lesser thickness and, between the two poles, an area of greater thickness forming a stiffener (6.1, 6.2),
- fitting a metallic insert (7.1, 7.2) able to cover part of said areas of lesser thickness,
- winding a reinforcement (3) made from fibre and resin, and
- polymerisation.

2. A method of manufacturing a spherical storage vessel according to claim 1, **characterised in that** the extrusion/blow moulding operations comprise initially producing a cylinder with a thickness adapted to the storage vessel to be obtained and then placing said cylinder in a spherical mould (5.1, 5.2) whose join line corresponds to the equator of the storage vessel so as to obtain, between the two poles, said area of greater thickness (6.1, 6.2).

3. A method of manufacturing a storage vessel according to claim 1 or 2, **characterised in that**, before the winding of said reinforcement (3), the external surface of said internal skin (2) is coated with a film of adhesive.

4. A method of manufacturing a storage vessel according to any one of claims 1 to 3, **characterised in that** the resin of said reinforcement (3) is a resin with a high modulus of elasticity, preferably greater than 8%.

5. A method of manufacturing a storage vessel according to any one of claims 1 to 4, **characterised in that** the internal skin (2) is subjected to an internal pressure during the winding.

6. A method of manufacturing a storage vessel according to any one of claims 1 to 5, **characterised in that** the polymerisation is performed by a slow rise in temperature to a range lying between 80° and 120°C for several hours with also slow cooling.

7. A high-pressure gas storage vessel, **characterised in that** it comprises an internal skin (2) made from plastics material chosen from amongst crystallised polyethylenes and polyamides, having at the poles areas of lesser thickness partly covered by a metallic insert (7.1, 7.2) and a reinforcing structure (3) obtained by fibre winding and polymerised resin, said storage vessel having a leakage level of around 5 x 10⁻⁹ N.m³/s or an average permeability of around 1.16 x.10⁻¹³ N.m²/bar.s for a pressure of use greater than one half the bursting pressure.

8. A gas storage vessel according to claim 7, having the following parameters:
- leakage level for helium below 5 x 10⁻⁹ N.m³/s,
- internal-skin weight of approximately 10 kg for a total weight and volume of the storage vessel respectively of 81 kg and 300 litres,
- internal-skin thickness of at least 5 mm at any point,
- winding thickness of 16 mm,
- resistance to rupture to a pressure of 800 bar.

## Patentansprüche

1. Verfahren zum Herstellen eines Hochdruck-Gasbehälters, insbesondere für Helium, der wenigstens eine Befüllungs- und Entleerungsöffnung (4) aufweist, **dadurch gekennzeichnet, dass** es die folgenden Schritte umfasst:
- Herstellen einer inneren Haut (2) durch Strangpressen/Blasformen aus einem Kunststoff, der aus Polyethylenen und kristallisierten Polyamiden gewählt ist, derart, dass an den beiden Polen Zonen mit geringerer Dicke und zwischen den beiden Polen eine Zone mit größerer Dicke, die eine Verstärkung (6.1, 6.2) bildet, erhalten werden,
- Anordnen eines metallischen Einsatzes (7.1, 7.2), der einen Teil der Zonen mit geringerer Dicke abdecken kann,
- Bewickeln mit einer Harz-Faserverstärkung (3) und
- Polymerisieren.

2. Verfahren zum Herstellen eines sphärischen Behälters nach Anspruch 1, **dadurch gekennzeichnet, dass** die Strangpress-/Blasformvorgänge darin bestehen, zunächst einen Zylinder mit einer Dicke, die an den zu erhaltenden Behälter angepasst ist, zu verwirklichen und dann den Zylinder in einer sphärischen Gießform (5.1, 5.2) anzuordnen, deren Verbindungsebene dem Äquator des Behälters entspricht, derart, dass zwischen den beiden Polen die Zone mit größerer Dicke (6.1, 6.2) erhalten wird.

3. Verfahren zum Herstellen eines Behälters nach Anspruch 1 oder 2, **dadurch gekennzeichnet, dass** die äußere Oberfläche der inneren Haut (2) vor dem Bewickeln mit der Verstärkung (3) mit einer Klebeschicht überzogen wird.

4. Verfahren zum Herstellen eines Behälters nach einem der Ansprüche 1 bis 3, **dadurch gekennzeichnet, dass** das Harz der Verstärkung (3) ein Harz mit einem großen Dehnungskoeffizienten, der vorzugsweise größer als 8 % ist, ist.

5. Verfahren zum Herstellen eines Behälters nach einem der Ansprüche 1 bis 4, **dadurch gekennzeichnet, dass** die innere Haut (2) bei der Bewicklung mit einem Innendruck beaufschlagt wird.

6. Verfahren zum Herstellen eines Behälters nach einem der Ansprüche 1 bis 5, **dadurch gekennzeichnet, dass** die Polymerisation durch einen langsamen Temperaturanstieg während mehrerer Stunden bis zu einem Wert im Bereich von 80 °C bis 120 °C und eine ebenfalls langsame Abkühlung bewerkstelligt wird.

7. Hochdruck-Gasbehälter, **dadurch gekennzeichnet, dass** er eine innere Haut (2) aus einem Kunststoff, der aus Polyethylenen und kristallisierten Polyamiden gewählt ist, die an den Polen Zonen mit geringerer Dicke aufweist, die teilweise mit einem metallischen Einsatz (T.1, 7.2) abgedeckt sind, sowie eine Verstärkungsstruktur (3), die durch Bewickeln mit einer polymerisierten Harzfaser erhalten wird, umfasst, wobei der Behälter einen Leckanteil in der Größenordnung von 5.10⁻⁹ N · m³/s oder eine mittlere Permeabilität in der Größenordnung von 1,16 · 10⁻¹³ N · m²/Bar· s bei einem Arbeitsdruck von mehr als der Hälfte des Berstdrucks aufweist.

8. Gasbehälter nach Anspruch 7, der die folgenden Parameter aufweist:
- Leckverlust für Helium geringer als 5 · 10⁻⁹ N · m³/s,
- Masse der Innenhaut von etwa 12 Kilogramm bei einem Gesamtgewicht und einem Behältervolumen von 81 Kilogramm bzw. 300 Litern,
- Dicke der Innenhaut mindestens 5 mm an jeder Stelle,
- Dicke der Bewicklung 16 mm,
- Bruchbeständigkeit bis zu einem Druck von 800 Bar.
